(19) Europäisches Patentamt
European Patent Office
Office européen des brevets

(11) **EP 2 750 280 B1**

(12) **FASCICULE DE BREVET EUROPEEN**

(45) Date de publication et mention
de la délivrance du brevet:
**14.10.2015   Bulletin 2015/42**

(51) Int Cl.:
**H02M 3/337** *(2006.01)*   **H02J 7/02** *(2006.01)*

(21) Numéro de dépôt: **13181857.7**

(22) Date de dépôt: **27.08.2013**

(54) **Système de conversion d'énergie**

Energieumwandlungssystem

Energy conversion system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.08.2012   FR 1258039**

(43) Date de publication de la demande:
**02.07.2014   Bulletin 2014/27**

(73) Titulaire: **Schneider Electric Industries SAS 92500 Rueil-Malmaison (FR)**

(72) Inventeurs:
• **Ladas, Dimitrios**
  **38000 Grenoble (FR)**
• **Perriard, Yves**
  **CH-2000 Neuchatel (CH)**
• **Auvigne, Christophe**
  **01630 Sergy (FR)**
• **Germano, Paolo**
  **CH-1073 Savigny (CH)**

(74) Mandataire: **Myon, Gérard Jean-Pierre et al Cabinet Lavoix 62, rue de Bonnel 69003 Lyon (FR)**

(56) Documents cités:
**US-A1- 2003 038 612     US-A1- 2010 219 696**

EP 2 750 280 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un système de conversion d'énergie électrique destiné à alimenter une charge à partir d'une source de tension. Le système de conversion selon l'invention comprend un premier condensateur, un deuxième condensateur, deux bornes de connexion de la charge et un transformateur électrique comportant un enroulement primaire et un enroulement secondaire, le premier condensateur étant relié électriquement à l'enroulement primaire, les bornes de connexion étant reliées électriquement à l'enroulement secondaire.

On connaît des systèmes de conversion d'énergie électrique comportant un enroulement primaire et un enroulement secondaire, chacun des enroulements étant connecté à un condensateur, l'enroulement primaire étant connecté à un générateur de tension alternative et l'enroulement secondaire étant connecté à une résistance de charge. Ces systèmes de conversion présentent des topologies différentes suivant l'agencement du condensateur du secondaire, le condensateur du primaire étant lui placé en série entre le générateur de tension alternative et l'enroulement primaire, parmi lesquelles figurent une topologie série-série, où le condensateur du secondaire est connecté en série entre l'enroulement secondaire et la résistance de charge, et une topologie série-parallèle, montrée par example dans US 2010/0219696, où le condensateur du secondaire est connecté en parallèle de la résistance de charge et de l'enroulement secondaire. L'utilisation de l'une ou l'autre de ces topologies, permet par exemple, de réaliser la charge d'une batterie à courant constant ou à tension constante selon l'utilisation respective de la topologie série-série ou de la topologie série-parallèle.

Toutefois, le chargement d'une batterie tel que recommandé par les constructeurs nécessite une première étape de chargement, à courant constant, suivi d'une deuxième étape de chargement, à tension constante. Le chargement d'une batterie selon ces critères nécessite donc des moyens permettant, aux moments adéquats, l'utilisation de l'une ou l'autre des topologies précitées pour le chargement d'une batterie.

Le but de l'invention est donc de proposer un système de conversion d'énergie électrique permettant de s'adapter au chargement d'une batterie de manière optimale, c'est-à-dire telle que préconisée par la fiche du constructeur de la batterie. Un tel système permet, outre l'adaptation pour chaque batterie, la simplification des lois de commande nécessaires dans le cas de l'utilisation de l'une ou l'autre des topologies précitées.

A cet effet, l'invention a pour objet un système de conversion d'énergie électrique du type précité, caractérisé en ce qu'il comprend un troisième condensateur et des moyens de commutation propres à commuter, de manière réversible, entre une première configuration, dans laquelle le deuxième condensateur est connecté en série entre l'enroulement secondaire et l'une des deux bornes de connexion, et une deuxième configuration, dans laquelle le troisième condensateur est connecté en parallèle de l'enroulement secondaire et entre les bornes de connexion, seul le deuxième condensateur parmi les deuxième et troisième condensateurs étant propre à être parcouru par un courant électrique dans la première configuration, alors que seul le troisième condensateur parmi les deuxième et troisième condensateurs est propre à être parcouru par le courant électrique dans la deuxième configuration, le système de conversion comprenant des moyens de commande des moyens de commutation selon une loi de commande.

Suivant d'autres aspects avantageux de l'invention, le système de conversion de l'énergie électrique comprend une ou plusieurs des caractéristiques suivantes, prises isolément ou suivant toutes les combinaisons techniquement possibles :

- les moyens de commutation comprennent un premier interrupteur connecté entre l'enroulement secondaire et l'une des deux bornes du troisième condensateur, un deuxième interrupteur connecté entre la borne du troisième condensateur et l'une des deux bornes de connexion, et un commutateur connecté entre l'autre borne, parmi les deux bornes de connexion, et l'enroulement secondaire ;
- le commutateur est commutable entre une première position correspondant à la première configuration et une deuxième position correspondant à la deuxième configuration, les premier et deuxième interrupteurs étant ouverts dans la première configuration et fermés dans la deuxième configuration ;
- le commutateur est un commutateur à trois positions, la première position correspondant à la première configuration, la deuxième position correspondant à la deuxième configuration et la troisième position étant une position de repos dans laquelle aucun courant ne traverse le commutateur ;
- la loi de commande comprend une étape de coupure de la circulation du courant entre la source de tension et les bornes de connexion, lors du passage d'une configuration à l'autre.

L'invention a également pour objet une borne de rechargement d'une batterie électrique, telle qu'une batterie de véhicule électrique, comprenant un système de conversion d'énergie, caractérisée en ce que le système de conversion d'énergie est conforme à l'invention et en ce que la loi de commande dépend d'un profil de charge de la batterie.

Suivant d'autres aspects avantageux de l'invention, la borne de rechargement comprend une ou plusieurs des caractéristiques suivantes, prises isolément ou suivant toutes les combinaisons techniquement possibles :

- le profil de charge comporte une étape de charge à courant constant et une étape de charge à tension constante, l'étape de charge à courant constant correspond à la première configuration et l'étape de charge à tension constante correspond à la deuxième configuration ;
- la borne de rechargement comprend en outre un redresseur de tension connecté entre les bornes de connexion, le redresseur de tension étant propre à délivrer une tension continue à la batterie ;
- la source de tension est une source de tension continue et la borne de rechargement comprend en outre un onduleur connecté entre la source de tension continue et le premier condensateur ;
- la borne de rechargement comprend en outre un circuit de commande de l'onduleur et le circuit de commande pilote l'onduleur selon une modulation avec décalage de phase.

Ces caractéristiques et avantages de l'invention apparaîtront à la lecture de la description qui va suivre, donnée uniquement à titre d'exemple non limitatif et faite en référence aux dessins annexés, sur lesquels :

- la figure 1 est un schéma d'une chaîne de conversion d'énergie électrique,
- la figure 2 est un profil de charge d'une batterie électrique,
- la figure 3 est un circuit électrique représentant un système de conversion d'énergie électrique de topologie série-série de l'état de la technique,
- la figure 4 est un circuit électrique représentant un système de conversion d'énergie électrique de topologie série-parallèle de l'état de la technique,
- la figure 5 est un circuit électrique d'un système de conversion d'énergie électrique conforme à l'invention,
- la figure 6 représente le circuit électrique visible à la figure 5 lorsqu'il est dans une topologie série-série,
- la figure 7 représente le circuit électrique visible à la figure 5 lorsqu'il est dans une topologie série-parallèle,
- la figure 8 est un ensemble de courbes représentant l'évolution de la tension au primaire du système de conversion conforme à l'invention en fonction de la tension de charge, lorsque le convertisseur est dans une étape de chargement à courant constant, et
- la figure 9 est un ensemble de courbes représentant l'évolution de la tension au primaire du système de conversion conforme à l'invention en fonction du courant de charge, lorsque le convertisseur est dans une étape de chargement à tension constante.

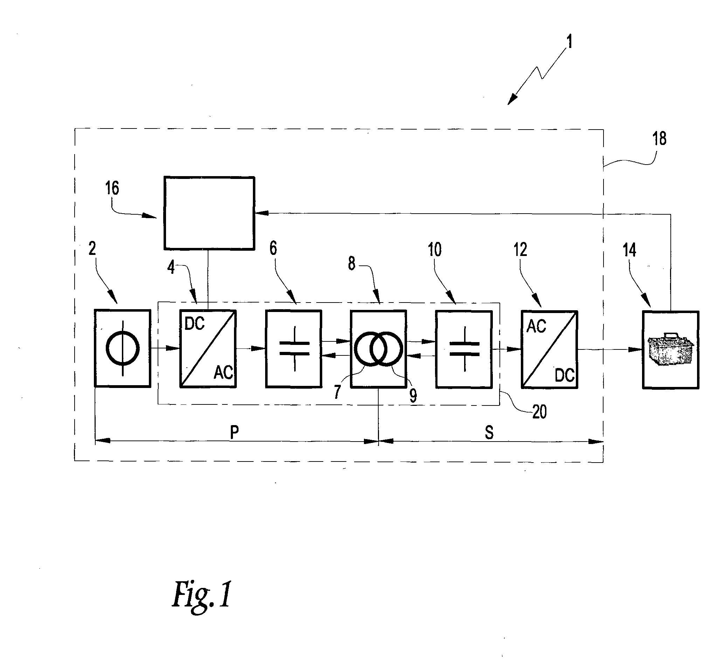

Sur la figure 1, une chaîne 1 de conversion d'énergie électrique comprend une source 2 de tension continue connectée à un onduleur 4. La source de tension 2 peut être constituée par un étage redresseur connecté au réseau 50 Hz ou par toute autre dispositif équivalent. L'onduleur 4 est connecté à une première capacité 6, elle-même reliée à un enroulement primaire 7 d'un transformateur 8. Le transformateur 8 comprend un enroulement secondaire 9 connecté à une deuxième capacité 10, elle-même connectée à un redresseur 12 de tension. Ce redresseur 12, apte à convertir une tension alternative en une tension continue, est connecté à une charge telle qu'une batterie 14. Un circuit 16 de commande et de communication est connecté entre la batterie 14 et l'onduleur 4. Ce circuit 16 permet de piloter l'onduleur 4, selon une modulation avec décalage de phase. En variante, d'autres types de commande peuvent être utilisés. La partie communication du circuit 16 lui permet de collecter des informations de tension et de courant relatives à la batterie 14.

Le générateur 2, l'onduleur 4 et la première capacité 6 sont connectés à un côté primaire P du transformateur 8, tandis que la deuxième capacité 10, le redresseur 12 et la batterie 14 sont connectés à un côté secondaire S du transformateur 8. Le circuit de commande et de communication 16 est relié à l'onduleur 4 et au secondaire S du transformateur 8 via un circuit de commande et de communication secondaire qui n'est pas représenté. Les première 6 et deuxième 10 capacités comprennent chacune au moins un condensateur.

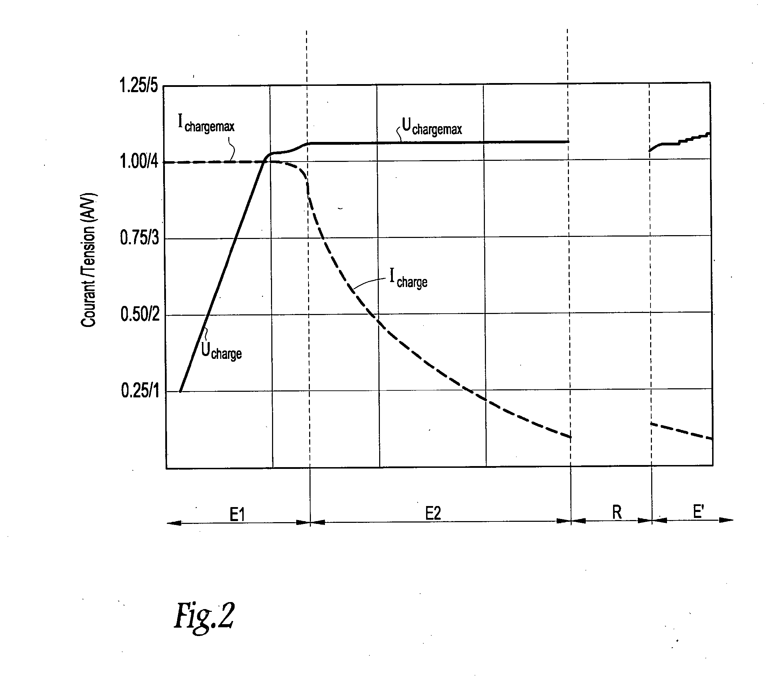

La batterie 14 est apte à être rechargée par une borne 18 de rechargement qui comprend un système de conversion 20 d'énergie électrique conforme à l'invention. La batterie 14 est apte à être rechargée selon un profil de charge, visible à la figure 2, qui lui est propre et qui comprend deux étapes E1 et E2. Au cours de la première étape E1, la batterie 14 est rechargée par un courant de charge constant maximal $I_{chargemax}$ et une tension de charge variable $U_{charge}$. Cette tension $U_{charge}$ augmente du début de l'étape E1 à la fin de l'étape E1 pour atteindre, à la fin de l'étape E1, une tension maximale de charge $U_{chargemax}$. Au cours de la deuxième étape E2, la batterie 14 est rechargée avec la tension de charge maximale $U_{chargemax}$ et avec un courant de charge variable $I_{charge}$. Ce courant $I_{charge}$ diminue au cours de l'étape E2 pour arriver à un courant quasi-nul à la fin de l'étape E2.

A la fin de l'étape E2, la batterie est rechargée. Si celle-ci n'est pas utilisée et laissée au repos pendant une durée R, elle subit un léger déchargement. Dans ce cas, une étape E' occasionnelle est mise en place afin de recharger la batterie 14 de manière optimale, c'est-à-dire afin qu'elle retrouve un état similaire à l'état dans lequel elle se trouvait à la fin de l'étape E2.

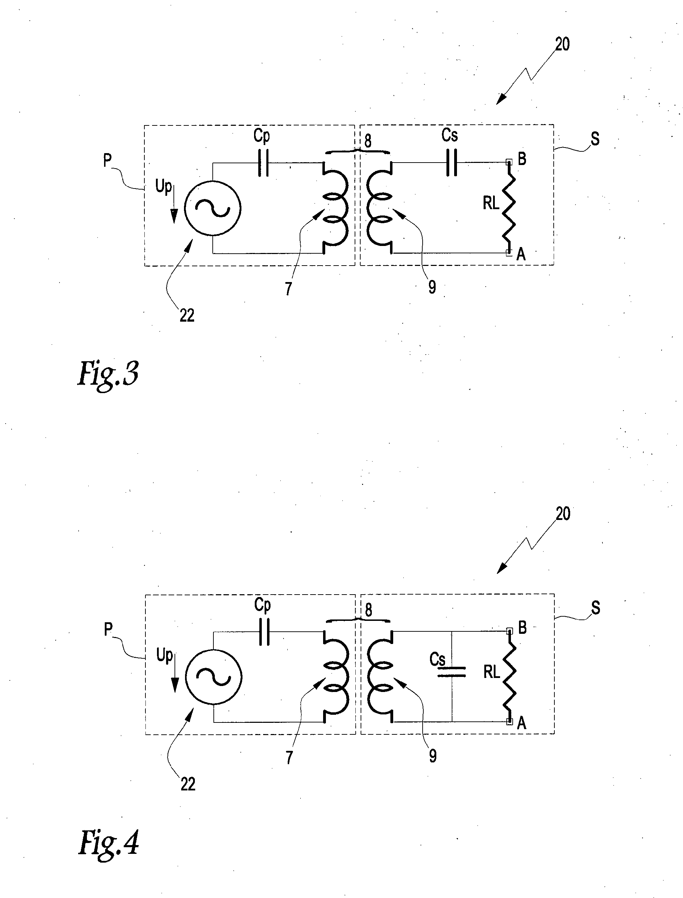

Dans la littérature, il est connu plusieurs topologies pour des systèmes de conversion 20 parmi lesquelles une topologie série-série, ou SS, visible à la figure 3, et une topologie série-parallèle, ou SP, visible à la figure 4. Dans de telles topologies SS et SP, un générateur 22 d'une tension alternative Up, formant une source de tension alternative, et un premier condensateur Cp sont connectés à l'enroulement primaire 7 du transformateur 8, et un deuxième condensateur Cs et une résistance de charge RL sont connectés à l'enroulement secondaire 9 du transformateur 8. Les premier Cp et deuxième Cs condensateurs sont utilisés à des fins de compensation d'énergie réactive à la fréquence de fonctionnement du système 20. Ils sont utilisés pour augmenter le rendement du système 20.

Dans la topologie SS, le deuxième condensateur Cs est connecté en série avec la résistance de charge RL, ce qui rend le système de conversion d'énergie électrique 20 apte à charger une batterie 14 à courant constant tandis que, dans la topologie SP, le deuxième condensateur Cs est connecté en parallèle avec la résistance de charge RL, ce qui rend le système 20 apte à charger une batterie 14 à tension constante.

La source de tension alternative 22, visible aux figures 3 à 7, est analogue à un ensemble comprenant la source 2 de tension continue et l'onduleur 4 visibles à la figure 1.

Les condensateurs Cp et Cs ont des capacités qui peuvent être déterminées, selon un modèle, et selon la topologie du système 20, à partir d'une valeur fixée de la tension Up aux bornes du générateur 22 de tension alternative.

Ainsi, pour une topologie SS, les valeurs des capacités des condensateurs Cp et Cs sont respectivement $\dfrac{1}{\omega_0^2 \cdot L_p}$

et $\dfrac{1}{\omega_0^2 \cdot L_s}$ , $L_p$ étant l'inductance de l'enroulement primaire 7, $L_s$ étant l'inductance de l'enroulement secondaire 9, et

$\omega_0$ la pulsation liée à la fréquence du signal de la tension Up. De même, pour une topologie SP, les valeurs des capacités des condensateurs Cp et Cs valent respectivement $\dfrac{L_s}{(L_p L_s - M^2) \cdot \omega_0^2}$ et $\dfrac{L_s}{R_s^2 + L_s^2 \cdot \omega_0^2}$ , $R_s$ étant inférieur d'au moins un facteur 100 à $R_L$, $R_S$ étant la résistance série du bobinage secondaire. Si la condition « $R_s$ est inférieur d'au moins un facteur 100 à $R_L$ » n'est pas satisfaite, Cs vaut :

$$\frac{\left(R_S{}^2 + L_S{}^2 \omega_0{}^2\right)\left(R_S(R_L + R_S) + L_S{}^2 \omega_0{}^2\right)}{L_P R_S{}^3 (R_L + R_S)\omega_0{}^2 + L_S R_S\left[M^2(R_L - R_S) + L_P L_S(R_L + 2R_S)\right]\omega_0{}^4 + L_S{}^3\left(L_P L_S - M^2\right)\omega_0{}^6}$$

où M est l'inductance mutuelle entre le primaire et le secondaire du transformateur et les autres termes de l'équation sont les mêmes que ceux identifiés précédemment.

Ces valeurs garantissent un fonctionnement à la résonance du système, c'est-à-dire un déphasage nul entre la tension primaire et le courant primaire, et une tolérance est acceptable sur ces valeurs.

Par exemple, pour une topologie SS, la tension primaire Up vaut 100 V, un courant Ip traversant le côté primaire vaut 3,48 A. Dans ce cas, un coefficient d'efficacité N du système 20 vaut environ 0,86, alors que, sans l'ajout des condensateurs Cs, Cp, le coefficient d'efficacité N, vaudrait 0,001. Cet exemple illustre l'importance des moyens de compensation d'énergie réactive qui améliorent le coefficient d'efficacité d'un facteur proche de 1000.

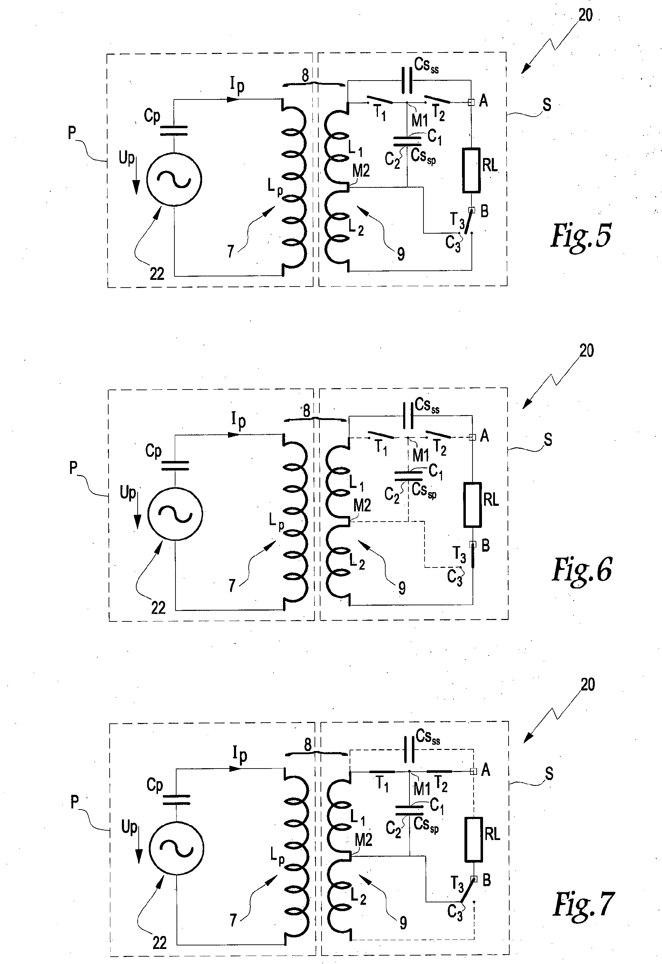

La figure 5 présente un système 20 de conversion d'énergie électrique conforme à l'invention. Il comprend un côté primaire P et un côté secondaire S. Le côté primaire P comprend l'enroulement primaire 7 du transformateur 8, la source 22 de tension alternative Up et le premier condensateur Cp, le premier condensateur Cp et la source 22 étant connectés en série, et chacun d'entre eux étant connecté à une des bornes de l'enroulement primaire 7. Sur les figures 5 à 7, le générateur de tension alternative 22 représente l'association d'une source de tension continue et d'un onduleur de tension tels que les éléments 2 et 4 représentés à la figure 1. En pratique, la source de tension continue 2 n'appartient pas au système 20 qu'elle alimente en tension continue, même si le générateur 22 est représenté dans le périmètre du système 20 aux figures 5 à 7, car l'onduleur 4 appartient à ce système dans l'exemple décrit. On note Lp l'inductance de l'enroulement primaire 7. Le côté secondaire comprend l'enroulement secondaire 9 du transformateur 8, la résistance de charge RL, un deuxième condensateur secondaire $Cs_{ss}$, un troisième condensateur secondaire $Cs_{sp}$, deux interrupteurs T1, T2 et un commutateur T3. On note L1+L2 l'inductance de l'enroulement secondaire 9. Sur le côté secondaire, on nomme A et B les bornes de la résistance de charge RL, qui sont les bornes de connexion de la batterie 14 à charger.

Sur les figures 5 à 7, la résistance de charge RL représente à la fois le redresseur 12 et la batterie 14 de la figure 1.

Une première borne C1 du troisième condensateur $Cs_{sp}$ est raccordée électriquement de façon permanente à un point médian M1 situé entre les interrupteurs T1 et T2. Une deuxième borne C2 du troisième condensateur, opposée à la première borne C1, est raccordée électriquement, de façon permanente à un point médian M2 de l'enroulement secondaire 9 et à une borne C3 du commutateur T3.

Les moyens de commutation du système de conversion 20 comprennent les interrupteurs T1, T2 et le commutateur T3 et sont aptes à commuter de manière réversible.

Les interrupteurs T1 et T2 sont aptes à être basculés par des moyens de commande, non représentés sur les figures, dans une position ouverte ou fermée. Le commutateur T3 est apte à être basculé par les moyens de commande dans une position intermédiaire, telle que visible à la figure 5, droite, telle que visible à la figure 6, ou gauche, telle que visible à la figure 7.

En particulier, les moyens de commutation sont aptes à commuter, de manière réversible, entre une première configuration SS dans laquelle le deuxième condensateur $Cs_{ss}$ est connecté en série entre l'enroulement secondaire 9 et l'une des deux bornes de connexion A (figure 6), et une deuxième configuration SP dans laquelle le troisième condensateur $Cs_{sp}$ est connecté en parallèle de l'enroulement secondaire 9 et entre les bornes A, B de connexion de la charge (figure 7). Seul le deuxième condensateur $Cs_{ss}$, parmi les deuxième $Cs_{ss}$ et troisième $Cs_{sp}$ condensateurs, est propre à être parcouru par un courant électrique dans la première configuration SS (figure 6). Seul le troisième $Cs_{sp}$ condensateur, parmi les deuxième $Cs_{ss}$ et troisième $Cs_{sp}$ condensateurs, est propre à être parcouru par le courant électrique dans la deuxième configuration SP (figure 7).

Les moyens de commande, non représentés, permettent de commander les moyens de commutation, selon une loi de commande prédéterminée, notamment en fonction du profil de charge représenté à la figure 2.

Afin de retrouver les configurations SS et SP telles que précédemment décrites et visibles respectivement aux figures 3 et 4, les moyens de commande sont aptes à commander les interrupteurs et le commutateur afin que le système 20 prenne la première configuration SS ou la deuxième configuration SP selon les cas voulus.

Ainsi, dans la première configuration SS visible à la figure 6, les interrupteurs T1 et T2 sont ouverts et le commutateur T3 est dans la position droite. Cette configuration permet au système 20 de présenter la configuration SS, c'est-à-dire apte à charger la batterie 14 à courant constant.

Dans la deuxième configuration SP visible à la figure 7, les interrupteurs T1 et T2 sont fermés et le commutateur T3 est dans la position gauche. Dans cette configuration, la borne B est reliée à la borne C2 du troisième condensateur $Cs_{sp}$ et au point médian M2. Cette configuration permet au système 20 de présenter la configuration SP, c'est-à-dire apte à charger la batterie 14 à tension constante.

Les moyens de commutation formés des interrupteurs T1, T2 et du commutateur T3 sont aptes à passer, de façon réversible, d'une configuration à l'autre pour s'adapter au profil de charge de la batterie 14, tel que visible à la figure 2. En particulier, la loi de commande des moyens de commutation comprend une étape de coupure de la circulation de courant entre la source de tension alternative 22 et les bornes A et B, lors du passage de la configuration SS à la configuration SP, et lors du passage de la configuration SP à la configuration SS. Cette étape de coupure de la circulation de courant est mise en place en ouvrant les interrupteurs T1, T2 et le commutateur T3, afin de préserver le système 20 de tout dysfonctionnement.

En pratique, les valeurs des capacités des deuxième et troisième condensateurs $Cs_{ss}$ et $Cs_{sp}$ sont choisies en tenant compte de leurs modes de fonctionnement, série ou parallèle, selon une approche cohérente avec celle envisagée ci-dessus pour les valeurs du condensateur Cs. Plus précisément, la valeur du deuxième condensateur $Cs_{ss}$ est égale à $\dfrac{1}{\omega_0^2.(L_1+L_2)}$, alors que celle du troisième condensateur $Cs_{sp}$ est égale à $\dfrac{L_1}{R_s^2+L_1^2.\omega_0^2}$ dans le cas où $R_s$ est très inférieur à $R_L$. Dans le cas contraire, la valeur de $Cs_{sp}$ est égale à

$$\frac{\left(R_S^2+L_1^2\omega_0^2\right)\left(R_S(R_L+R_S)+L_1^2\omega_0^2\right)}{L_P R_S^3(R_L+R_S)\omega_0^2+L_1 R_S\left[M^2(R_L-R_S)+L_P L_1(R_L+2R_S)\right]\omega_0^4+L_1^3\left(L_P L_1-M^2\right)\omega_0^6}$$

avec les mêmes notations que précédemment.

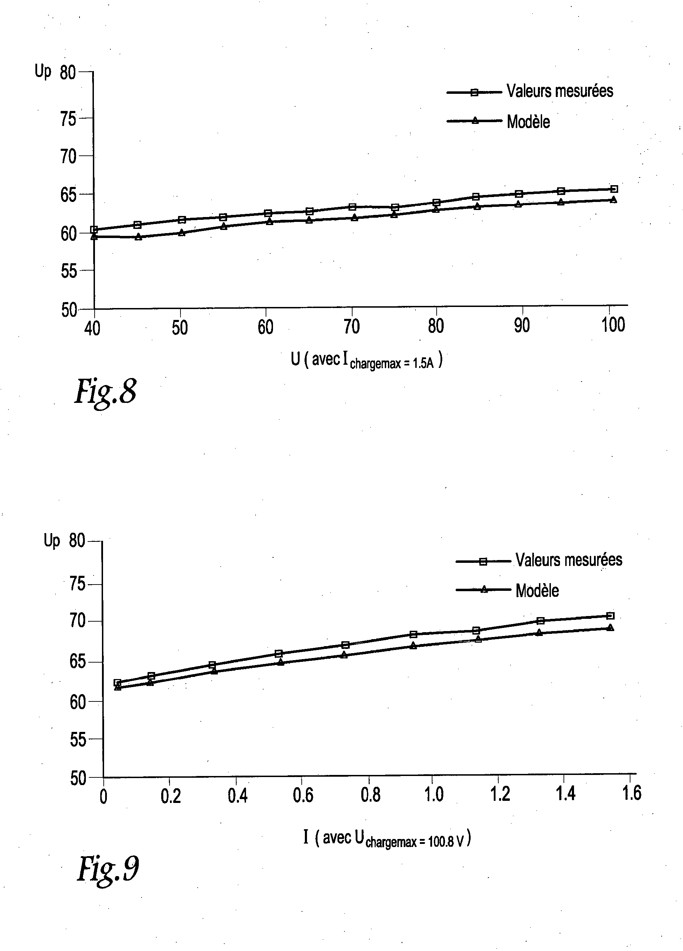

La figure 8 représente l'évolution de la tension primaire Up en fonction de la tension de charge à courant constant, c'est-à-dire lors de l'étape de charge E1, lorsque le système 20 est en configuration SS. Cette évolution est donnée pour une valeur de courant $I_{chargemax}$ constant égal à 1,5 A pour un modèle et pour des valeurs expérimentales mesurées.

La figure 9 représente l'évolution de la tension primaire Up en fonction du courant de charge à tension constante, c'est-à-dire lors de l'étape de charge E2, lorsque le système 20 est en configuration SP. Cette évolution est donnée pour une valeur de tension $U_{chargemax}$ constante égale à 100,8 V pour un modèle et pour des valeurs expérimentales mesurées.

Ainsi, le système 20 selon l'invention permet, dans une chaîne de conversion 1, de simplifier le côté secondaire S, sans ajouter de dispositif supplémentaire de régulation particulier. Les moyens de commutation sont présents du côté secondaire S du système 20 et réalisent les commutations afin d'adapter le chargement de la batterie 14 à son profil de charge nominal et optimal.

**Revendications**

1. Système (20) de conversion d'énergie électrique destiné à alimenter une charge (RL, 14) à partir d'une source (2, 4 ; 22) de tension, le système (20) de conversion comprenant un premier condensateur (Cp), un deuxième condensateur ($Cs_{ss}$), deux bornes (A, B) de connexion de la charge et un transformateur (8) électrique comportant un enroulement primaire (7) et un enroulement secondaire (9), le premier condensateur (Cp) étant relié électriquement à l'enroulement primaire (7), les bornes (A, B) de connexion étant reliées électriquement à l'enroulement secondaire (9),
   **caractérisé en ce que** le système (20) de conversion comprend un troisième condensateur ($Cs_{sp}$) et des moyens de commutation (T1, T2, T3) propres à commuter, de manière réversible, entre une première configuration (SS), dans laquelle le deuxième condensateur ($Cs_{ss}$) est connecté en série entre l'enroulement secondaire (9) et l'une (A) des deux bornes de connexion, et une deuxième configuration (SP) dans laquelle le troisième condensateur ($Cs_{sp}$) est connecté en parallèle de l'enroulement secondaire (9) et entre les bornes (A, B) de connexion, seul le deuxième condensateur ($Cs_{ss}$) parmi les deuxième ($Cs_{ss}$) et troisième ($Cs_{sp}$) condensateurs étant propre à être parcouru par un courant électrique dans la première configuration (SS), alors que seul le troisième ($Cs_{sp}$) condensateur parmi les deuxième ($Cs_{ss}$) et troisième ($Cs_{sp}$) condensateurs est propre à être parcouru par le courant électrique dans la deuxième configuration (SP), le système (20) de conversion comprenant des moyens de commande des moyens de commutation (T1, T2, T3) selon une loi de commande.

2. Système (20) de conversion d'énergie selon la revendication 1, **caractérisé en ce que** les moyens de commutation comprennent un premier interrupteur (T1) connecté entre l'enroulement secondaire (9) et l'une (C1) des deux bornes du troisième condensateur ($Cs_{sp}$), un deuxième interrupteur (T2) connecté entre ladite borne (C1) du troisième condensateur ($Cs_{sp}$) et l'une (A) des deux bornes de connexion, et un commutateur (T3) connecté entre l'enroulement secondaire (9) et l'autre borne (B) parmi les deux bornes (A, B) de connexion.

3. Système (20) de conversion d'énergie selon la revendication 2, **caractérisé en ce que** le commutateur (T3) est commutable entre une première position correspondant à la première configuration (SS) et une deuxième position correspondant à la deuxième configuration (SP), les premier (T1) et deuxième (T2) interrupteurs étant ouverts dans la première configuration (SS) et fermés dans la deuxième configuration (SP).

4. Système (20) de conversion d'énergie selon la revendication 2 ou 3, **caractérisé en ce que** le commutateur (T3) est un commutateur (T3) à trois positions, la première position correspondant à la première configuration (SS), la deuxième position correspondant à la deuxième configuration (SP) et la troisième position étant une position de repos dans laquelle aucun courant ne traverse le commutateur (T3).

5. Système (20) de conversion d'énergie selon l'une des revendications précédentes, **caractérisé en ce que** la loi de commande comprend une étape de coupure de la circulation du courant entre la source de tension (2, 4 ; 22) et les bornes (A, B) de connexion, lors du passage d'une configuration (SS, SP) à l'autre (SP, SS).

6. Borne (18) de rechargement d'une batterie (14) électrique, telle qu'une batterie (14) de véhicule électrique, comprenant un système de conversion d'énergie, **caractérisée en ce que** le système (20) de conversion d'énergie est conforme à l'une quelconque des revendications précédentes et **en ce que** la loi de commande dépend d'un profil de charge (figure 2) de la batterie (14).

7. Borne (18) de rechargement selon la revendication 6, **caractérisée en ce que** le profil de charge comporte une étape (E1) de charge à courant constant ($I_{chargemax}$) et une étape (E2) de charge à tension constante ($U_{chargemax}$), **en ce que** l'étape de charge à courant constant (E1) correspond à la première configuration (SS) et **en ce que** l'étape de charge à tension constante (E2) correspond à la deuxième configuration (SP).

8. Borne (18) de rechargement selon la revendication 6 ou 7, **caractérisée en ce qu'**elle comprend en outre un redresseur (12) de tension connecté entre les bornes (A, B) de connexion, le redresseur de tension étant propre à délivrer une tension continue à la batterie (14).

**9.** Borne de rechargement selon l'une des revendications 6 à 8, **caractérisée en ce que** la source de tension est une source de tension continue (2) et **en ce que** la borne (18) de rechargement comprend en outre un onduleur (4) connecté entre la source (2) de tension continue et le premier condensateur (Cp).

**10.** Borne (18) de rechargement selon la revendication 9, **caractérisée en ce que** la borne (18) de rechargement comprend en outre un circuit de commande (16) de l'onduleur (4) et le circuit de commande (16) pilote l'onduleur (4) selon une modulation avec décalage de phase.


**Patentansprüche**

**1.** System (20) zum Wandeln von elektrischer Energie, vorgesehen zum Versorgen einer Last (RL, 14) ausgehend von einer Spannungsquelle (2, 4; 22), wobei das System (20) zum Wandeln einen ersten Kondensator (Cp), einen zweiten Kondensator ($CS_{ss}$), zwei Verbindungsanschlüsse (A, B) der Last und einen elektrischen Transformator (8) aufweist, der eine Primärwicklung (7) und eine Sekundärwicklung (9) aufweist, wobei der erste Kondensator (Cp) elektrisch mit der Primärwicklung (7) verbunden ist und die Verbindungsanschlüsse (A, B) elektrisch mit der Sekundärwicklung (9) verbunden sind,
dadurch charakterisiert, dass das Wandelsystem (20) einen dritten Kondensator ($CS_{sp}$) und Schaltmittel (T1, T2, T3) aufweist, die dazu geeignet sind, umkehrbar zwischen einer ersten Konfiguration (SS), in dem der zweite Kondensator ($CS_{ss}$) seriell zwischen die Sekundärwicklung (9) und einem (A) der zwei Verbindungsanschlüsse geschaltet ist, und einer zweiten Konfiguration (SP), in dem der dritte Kondensator ($CS_{sp}$) parallel zu der Sekundärwicklung (9) und zwischen die Verbindungsanschlüsse (A, B) geschaltet ist, umzuschalten, wobei nur der zweite Kondensator ($Cs_{ss}$) von dem zweiten Kondensator ($Cs_{ss}$) und dem dritten Kondensator ($Cs_{sp}$) geeignet ist, in der ersten Konfiguration (SS) von einem elektrischen Strom durchflossen zu werden, wohingegen nur der dritte Kondensator ($Cs_{sp}$) von dem zweiten Kondensator ($Cs_{ss}$) und dem dritten Kondensator ($Cs_{sp}$) geeignet ist, in der zweiten Konfiguration (SP) von einem elektrischen Strom durchflossen zu werden, wobei das System (20) zum Wandeln Mittel zum Steuern der Schaltmittel (T1, T2, T3) gemäß einer Steuervorschrift aufweist.

**2.** System (20) zum Wandeln von Energie gemäß Anspruch 1, dadurch charakterisiert, dass die Schaltmittel einen ersten Schalter (T1), der zwischen die Sekundärwicklung (9) und einen (C1) der zwei Anschlüsse des dritten Kondensators ($Cs_{sp}$) geschaltet ist, einen zweiten Schalter (T2), der zwischen den Anschluss (C1) des dritten Kondensators ($Cs_{sp}$) und einen (A) der zwei Verbindungsanschlüsse geschaltet ist, und einen Schalter (T3) aufweist, der zwischen die Sekundärwicklung (9) und den anderen Anschluss (B) von den zwei Verbindungsanschlüssen (A, B) geschaltet ist.

**3.** System (20) zum Wandeln von Energie gemäß Anspruch 2, dadurch charakterisiert, dass der Schalter (T3) zwischen einer ersten Position, die der ersten Konfiguration (SS) entspricht, und einer zweiten Position, die der zweiten Konfiguration (SP) entspricht, schaltbar ist, wobei der erste Schalter (T1) und der zweite Schalter (T2) in der ersten Konfiguration (SS) geöffnet sind und in der zweiten Konfiguration (SP) geschlossen sind.

**4.** System (20) zum Wandeln von Energie gemäß Anspruch 2 oder 3, dadurch charakterisiert, dass der Schalter (T3) ein Schalter (T3) mit drei Positionen ist, wobei die erste Position der ersten Konfiguration (SS) entspricht, die zweite Position der zweiten Konfiguration (SP) entspricht und die dritte Position eine Ruheposition ist, in der kein Strom den Schalter (T3) durchfließt.

**5.** System (20) zum Wandeln von Energie gemäß einem der vorhergehenden Ansprüche, dadurch charakterisiert, dass die Steuervorschrift einen Schritt zum Abschneidens des Zirkulierens des Stroms zwischen der Spannungsquelle (2, 4; 22) und den Verbindungsanschlüssen (A, B) beim Übergang von einer Konfiguration (SS, SP) in die andere (SP, SS) aufweist.

**6.** Anschluss (18) zum Wiederaufladen einer elektrischen Batterie (14), wie eine Batterie (14) eines elektrischen Fahrzeugs, aufweisend ein System zum Wandeln von Energie, dadurch charakterisiert, dass das System (20) zum Wandeln gemäß einem der vorhergehenden Ansprüche ist und dadurch, dass die Steuervorschrift von einem Ladeprofil (Figur 2) der Batterie (14) abhängt.

**7.** Anschluss (18) zum Wiederaufladen gemäß Anspruch 6, dadurch charakterisiert, dass das Ladeprofil einen Schritt (E1) des Ladens mit konstantem Strom ($I_{chargemax}$) und einen Schritt (E2) des Ladens mit konstanter Spannung ($U_{chargemax}$) aufweist, dadurch, dass der Schritt des Ladens mit konstantem Strom (E1) der ersten Konfiguration (SS) entspricht und dadurch, dass der Schritt des Ladens mit konstanter Spannung (E2) der zweiten Konfiguration (SP) entspricht.

8. Anschluss (18) zum Wiederaufladen gemäß Anspruch 6 oder 7, dadurch charakterisiert, dass er außerdem einen Spannungsgleichrichter (12) aufweist, der zwischen die Verbindungsanschlüsse (A, B) geschaltet ist, aufweist, wobei der Spannungsgleichrichter dazu geeignet ist, einen Gleichspannung an die Batterie (14) zu liefern.

9. Anschluss zum Wiederaufladen gemäß einem der Ansprüche 6 bis 8, dadurch charakterisiert, dass die Spannungsquelle eine Gleichspannungsquelle (2) ist und dadurch, dass der Anschluss (18) zum Wiederaufladen außerdem einen Wechselrichter (4) aufweist, der zwischen die Gleichspannungsquelle (2) und den ersten Kondensator (Cp) geschaltet ist.

10. Anschluss (18) zum Wiederaufladen gemäß Anspruch 9, dadurch charakterisiert, dass der Anschluss (18) zum Wiederaufladen außerdem eine Schaltung zum Steuern (16) des Wechselrichters (4) aufweist und die Schaltung zum Steuern (16) den Wechselrichter gemäß einer Modulation mit Phasenverschiebung steuert.

## Claims

1. Electrical energy conversion system (20) for powering a load (RL, 14) using a voltage source (2, 4; 22), the conversion system (20) comprising a first capacitor (Cp), a second capacitor ($Cs_{ss}$), two load connection terminals (A, B) and an electrical transformer (8) comprising a primary winding (7) and a secondary winding (9), the first capacitor (Cp) being electrically connected to the primary winding (7), and the connection terminals (A, B) being electrically connected to the secondary winding (9),
**characterised in that** the conversion system (20) comprises a third capacitor ($Cs_{sp}$) and switching means (T1, T2, T3) suitable for switching, reversibly, between a first configuration (SS), wherein the second capacitor ($Cs_{ss}$) is connected in series between the secondary winding (9) and one (A) of the two connection terminals, and a second configuration (SP) wherein the third capacitor ($Cs_{sp}$) is connected in parallel with the secondary winding (9) and between the connection terminals (A, B), only the second capacitor ($Cs_{ss}$) of the second ($Cs_{ss}$) and third ($Cs_{sp}$) capacitors being suitable for receiving the flow of an electric current in the first configuration (SS), whereas only the third ($Cs_{sp}$) capacitor of the second ($Cs_{ss}$) and third ($Cs_{sp}$) capacitors is suitable for receiving the flow of the electric current in the second configuration (SP), the conversion system (20) comprising means for controlling the switching means (T1, T2, T3) according to a control law.

2. Energy conversion system (20) according to claim 1, **characterised in that** the switching means comprise a first switch (T1) connected between the secondary winding (9) and one (C1) of the two terminals of the third capacitor ($Cs_{sp}$), a second switch (T2) connected between said terminal (C1) of the third capacitor ($Cs_{sp}$) and one (A) of the two connection terminals, and a commutator (T3) connected between the secondary winding (9) and the other terminal (B) of the two connection terminals (A, B).

3. Energy conversion system (20) according to claim 2, **characterised in that** the commutator (T3) can be switched between a first position corresponding to the first configuration (SS) and a second position corresponding to the second configuration (SP), the first (T1) and second (T2) switches being open in the first configuration (SS) and closed in the second configuration (SP).

4. Energy conversion system (20) according to claim 2 or 3, **characterised in that** the commutator (T3) is a three-position commutator (T3), the first position corresponding to the first configuration (SS), the second position corresponding to the second configuration (SP) and the third position being an idle position wherein no current flows through the commutator (T3).

5. Energy conversion system (20) according to any one of the preceding claims, **characterised in that** the control law comprises a step for cutting off the current flow between the voltage source (2, 4; 22) and the connection terminals (A, B), when switching from one configuration (SS, SP) to another (SP, SS).

6. Recharging station (18) for recharging an electric battery (14), such as an electric vehicle battery (14), comprising an energy conversion system, **characterised in that** the energy conversion system (20) is according to any of the preceding claims and **in that** the control law depends on a charging profile (figure 2) of the battery (14).

7. Recharging station (18) according to claim 6, **characterised in that** the charging profile comprises a charging step (E1) at constant current ($I_{chargemax}$) and a charging step (E2) at constant voltage ($U_{Chargemax}$), and **in that** the charging step at constant current (E1) corresponds to the first configuration (SS) and **in that** the charging step at constant voltage (E2) corresponds to the second configuration (SP).

8. Recharging station (18) according to claim 6 or 7, **characterised in that** it further comprises a voltage rectifier (12) connected between the connection terminals (A, B), the voltage rectifier being suitable for outputting a direct voltage to the battery (14).

9. Recharging station according to any one of claims 6 to 8, **characterised in that** the voltage source is a direct voltage source (2) and **in that** the recharging station (18) further comprises an inverter (4) connected between the direct voltage source (2) and the first capacitor (Cp).

10. Recharging station (18) according to claim 9, **characterised in that** the recharging station (18) further comprises a control circuit (16) of the inverter (4) and the control circuit (16) controls the inverter (4) according to a phase shift modulation.

*Fig.1*

*Fig.2*

Fig.3

Fig.4

*Fig.5*

*Fig.6*

*Fig.7*

Fig.8

Fig.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100219696 A